# EUROPÄISCHE PATENTSCHRIFT

(11) **EP 0 722 394 B1**
(45) Veröffentlichungstag und Bekanntmachung des Hinweises auf die Patenterteilung: **04.03.1998**
(21) Anmeldenummer: 94928761.9
(22) Anmeldetag: 10.10.1994
(51) Int. Cl.: B60K 41/06, F16H 61/00

(54) **STEUERUNGSANORDNUNG FÜR EIN KRAFTFAHRZEUG**
CONTROL DEVICE FOR A MOTOR VEHICLE
DISPOSITIF DE COMMANDE POUR VEHICULE A MOTEUR

(30) Priorität: 11.10.1993 DE 4334595
(43) Veröffentlichungstag der Anmeldung: 24.07.1996
(73) Patentinhaber: SIEMENS AKTIENGESELLSCHAFT, 80333 München (DE)
(72) Erfinder: GRAF, Friedrich, D-93059 Regensburg (DE); STORJOHANN, Kai, Dr., D-93053 Regensburg Grass (DE); ULM, Michael, Dr., D-93087 Alteglofsheim (DE); LENNINGER, Ralf-Johannes, D-93093 Donaustauf (DE); KAMMERL, August, D-93164 Brunn (DE)
(86) Internationale Anmeldenummer: DE9401188
(87) Internationale Veröffentlichungsnummer: WO9510427

(56) Entgegenhaltungen:
- EP-A- 0 284 216
- EP-A- 0 354 544
- WO-A-91/12428
- US-A- 4 945 481
- PATENT ABSTRACTS OF JAPAN Bd. 16, Nr. 124 (E-1183) 30 März 1992 & JP,A,03 289 833 (HITACHI) 19 Dezember 1991
- DATABASE WPI Week 9244, Derwent Publications Ltd., London, GB; AN 92-358204 & DE,A,41 12 738 (B.M.W.) 22. Oktober 1992

## Beschreibung

Die Erfindung betrifft eine Steuerungsanordnung nach dem Oberbegriff von Anspruch 1. Solche Steuerungen in einem Kraftfahrzeug mit automatischem Getriebe schließen eine Motorsteuerung und eine Getriebesteuerung ein. Es gibt sie in unterschiedlichen Ausführungen.

Bei einer gattungsgemäß bekannten integrierten Steuerung für das automatische Getriebe und den Motor eines Kraftfahrzeugs wird das Getriebe durch ein eigenständiges, von der Motorsteuerung getrenntes Steuergerät gesteuert (US-A 4 945 481).

Eine Getriebesteuerung hat im wesentlichen folgende Funktionen auszuführen:
- eine Schaltübergangssteuerung, die für ein weiches und verschleißfreies Einlegen der einzelnen Gänge sorgt;
- eine Steuerung der Wandlerüberbrückungskupplung;
- eine Schaltlogik, die den jeweils einzulegenden Gang festlegt;
- eine Eigendiagnose, und
- Basisfunktionen, wie z.B. Ein- und Ausgabefunktionen.

Da die Schaltübergangssteuerung getriebespezifisch ausgelegt werden muß, die Auslegung der Schaltlogik aber unter anderem von Daten des Motors und des Chassis des Kraftfahrzeugs abhängt, ergibt sich eine große Anzahl unterschiedlicher Varianten der Steuerung für die verschiedenen Kraftfahrzeugtypen. Außerdem ist der Aufwand für den Kabelbaum zwischen der Getriebesteuerung und den verschiedenen Ventilen und Sensoren im Getriebe recht hoch.

Der Erfindung liegt die Aufgabe zugrunde, die Anzahl der erforderlichen Kabelverbindungen und der dazu benötigten Steckverbindungen zu verringern. Diese Aufgabe wird erfindungsgemäß durch die Steuerung nach Anspruch 1 gelöst. Zweckmäßige Weiterbildungen der Erfindung sind in den Unteransprüchen niedergelegt.

Die Vorteile der Erfindung liegen insbesondere darin, daß die Anzahl der unterschiedlichen Varianten von Steuerungen für Kraftfahrzeugantriebe und der Aufwand für die Verkabelung und die Kommunikation im Kraftfahrzeug deutlich verringert wird. Die chassis- und motorspezifischen Funktionen der Getriebesteuerung können in die Motorsteuerung verlagert werden, während die rein getriebespezifischen Funktionen in einer rechnergesteuerten Gangwechseleinrichtung verbleiben können. Diese stellt einen "intelligenten" Aktor dar, der bei dem Hersteller des Getriebes vollständig getestet wird. Dies ergibt einen nicht unerheblichen Logistikvorteil.

Die Erfindung wird im folgenden anhand der Zeichnung erläutert. Es zeigen:
- Figur 1: die wesentlichen Bestandteile eines Kraftfahrzeugantriebs, der mit einer erfindungsgemäßen Steuerung versehen ist,
- Figur 2: die Steuerung des Antriebs nach Figur 1, als Blockdiagramm dargestellt,
- Figur 3: eine elektronische Getriebesteuerung mit Magnetflußsensoren zur Messung von Ventilstößelkräften,
- Figur 4: eine elektronische Getriebesteuerung mit Sensoren zum Messen der Öltemperatur in dem Getriebe,
- Figur 5: eine elektronische Getriebesteuerung mit einem Temperatursensor, der mit dem Getriebegehäuse thermisch gekoppelt ist,
- Figur 6: eine elektronische Getriebesteuerung mit einem Sensoren, die ihre Meßdaten über Transponder an die Getriebesteuerung übermitteln, und
- Figur 7: eine elektronische Getriebesteuerung mit einem Drucksensoren in dem Getriebegehäuse, die ihre Meßdaten über Transponder an die Getriebesteuerung übermitteln.

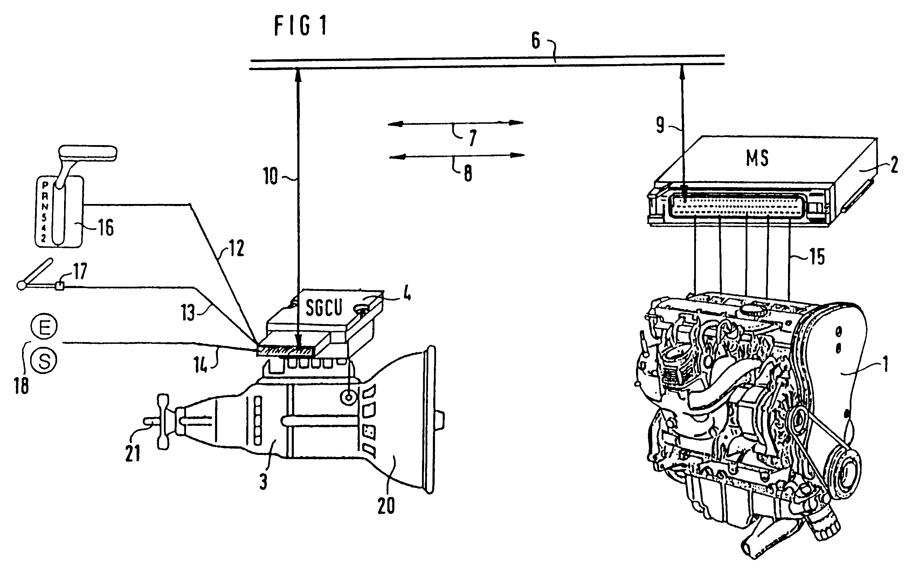

Ein Motor 1 wird von einer Einrichtung 2 zur Motorsteuerung und ein Getriebe 3 von einer Einrichtung 4 zur Getriebesteuerung, die hier als Gangwechseleinrichtung ausgebildet ist, gesteuert (Figur 1). Die Motorsteuerung-Einrichtung 2 und die Getriebesteuerung-Einrichtung 4 sind durch einen Kommunikationskanal 6 verbunden, der z.B. als CAN-Bus realisiert ist. Dieser Bus ist hier nur schematisch dargestellt, er ist allgemein bekannt und in vielen Veröffentlichungen beschrieben.

Zwischen der Motorsteuerung-Einrichtung 2 und der Getriebesteuerung-Einrichtung 4 werden zum einen Daten ausgetauscht, die zur Gangwahl dienen und durch einen Pfeil 7 angedeutet sind, und zum anderen Konfigurationsparameter, die der Anpassung an das jeweilige Kraftfahrzeug dienen und die durch einen Pfeil 8 angedeutet sind. Beispiele der über den Kommunikationskanal 6 übertragenen Daten werden weiter hinten aufgeführt.

Der bidirektionale Anschluß der Motorsteuerung-Einrichtung 2 an den Kommunikationskanal 6 ist durch eine Leitung 9 schematisch angedeutet, der ebenfalls bidirektionale Anschluß der Getriebesteuerung-Einrichtung 4 an den Kommunikationskanal 6 durch eine Leitung 10.

Durch Signalleitungen 12, 13 und 14 sind ein Wählhebel 16, ein Kickdown-Schalter 17 und ein Fahrprogramm-Wählschalter 18 an die Getriebesteuerung 4 angeschlossen. Über diese Bedienungselemente gibt der Fahrer in bekannter Weise seine Befehle oder Wünsche in die Getriebesteuerung-Einrichtung 4 ein: die Fahrstufen P, R, N, S, 1 und 2 über den Wählhebel 16, die Anforderung einer starken Beschleunigung über den Kickdown-Schalter 17 und die Auswahl zwischen einem "Economy"- und einem "Sport"-Fahrprogramm über den Fahrprogramm-Auswahlschalter 18.

Der Motor 1 ist durch Steuer- und Signalleitungen 15 mit der Motorsteuerung-Einrichtung 2 verbunden. Über diese Signalleitungen werden Sensorsignale über die Motordrehzahl, die Motortemperatur und andere bekannte Betriebsparameter von dem Motor 1 an die Motorsteuerung-Einrichtung 2 übertragen, und von dieser werden Befehle zum Steuern der Zündung, der Kraftstoff-Einspritzmenge, des Zündzeitpunktes und gfs. anderer bekannter Motorparameter an den Motor 1 übermittelt.

Der Motor 1 und das Getriebe 3 sind hier der besseren Übersichtlichkeit wegen getrennt dargestellt, es ist aber allgemein bekannt, daß die Abtriebswelle des Motors 1 direkt an den Drehmomentwandler 20 des Getriebes 3 angeschlossen ist. Entsprechend ist auch die Ausgangswelle 21 an den Abtriebsstrang des Kraftfahrzeugs angeschlossen. Das Chassis, die Radaufhängungen, die Räder und weitere Bestandteile des Kraftfahrzeugs sind hier nicht dargestellt, da sie von der Erfindung nicht betroffen und allgemein bekannt sind.

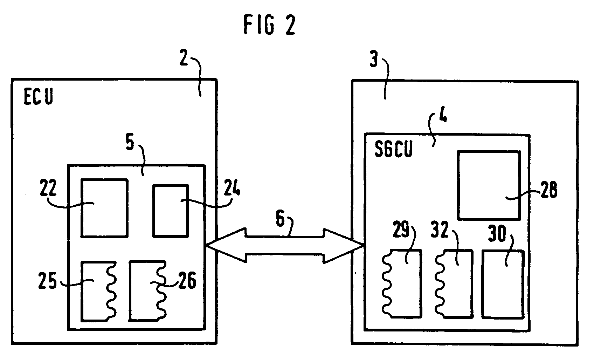

In die Motorsteuerung-Einrichtung 2 (Figur 2) sind - unter dem Bezugszeichen 5 zusammengefaßt - einige der Funktionseinheiten einer Getriebesteuerung-Einrichtung, die chassis- oder motorspezifisch sind, d.h. von Daten des Motors und des Chassis des Kraftfahrzeugs abhängen, integriert: eine Schaltlogik-Einrichtung oder Schaltpunktauswahl-Steuerung-Einrichtung 22, eine Fahrer- oder Fahrverhalten-Klassifikation-Einrichtung 24, eine Diagnoseschaltung-Einrichtung 25 und Basismodule 26, die z.B. Daten Ein- und -Ausgabeprozeduren durchführen. Die Schaltlogik-Einrichtung 22 kann als Fuzzy-Steuerung ausgebildet sein und in diesem Fall auch die Funktionen Fahrer- oder Fahrverhalten-Klassifikation, Fahrstreckenbewertung und dynamische Schaltpunktkorrektur enthalten (vgl. unsere ältere EP-A-622570, veröffentlicht am 02.11.94).

Die hier als rechnergesteuerte Gangwechseleinrichtung ausgebildete Getriebesteuerung-Einrichtung 4 - auch als SGCU (Smart Gear Change Unit) bezeichnet - enthält im wesentlichen nur Funktionseinheiten, die von Daten des Getriebes abhängig sind. Es sind dies eine Schaltablaufsteuerung-Einrichtung 28 eine Diagnoseschaltung-Einrichtung 29 für die Aktoren, eine Steuerung-Einrichtung 30 der Wandlerüberbrückungskupplung oder TCC (Torque Converter Clutch) und Basismodule 32, die z.B. die Signale von bekannten getriebenahen Sensoren verarbeiten, z.B. von Drehzahlsensoren im Getriebe, von Temperatur- und von Hydraulikdruck-Sensoren im Getriebe usw.

Die Getriebesteuerung-Einrichtung 4 ist so ausgeführt, daß nur eine minimale chassis- und motorabhängige Parametrierung ihrer Funktionen notwendig ist, d.h. daß sie nur sehr wenige Daten des Chassis und des Motors des jeweiligen Kraftfahrzeugs enthalten muß. Durch diese Aufteilung der Funktionen zwischen der Motorsteuerung-Einrichtung und der Getriebesteuerung-Einrichtung wird der Aufwand für die Verkabelung zwischen der Motorsteuerung-Einrichtung, der Gangwechseleinrichtung sowie den Sensoren und Aktoren - die hier nicht dargestellt sind, da sie allgemein bekannt sind und durch die Erfindung nicht verändert werden - sehr verringert.

Die Getriebesteuerung-Einrichtung 4 ist direkt an dem Gehäuse des Getriebes 3 befestigt oder in diesem Gehäuse untergebracht. Sie wird von dem Hersteller zusammen mit dem Getriebe als eine Einheit geliefert.

Zwischen der Motorsteuerung-Einrichtung (MS) 2 und der Gangwechseleinrichtung-Einrichtung (SGCU) 4 werden über den Kommunikationskanal Zustandsgrößen Z und Steuergrößen S ausgetauscht. Ein Beispiel für die auszutauschenden Daten ist in der nachfolgenden Tabelle dargestellt. In ihr bedeutet WK die Wandlerüberbrückungskupplung des Getriebes.

| MS an SGCU | Typ | SGCU an MS | Typ |
|---|---|---|---|
| M_{mot,ist} (Motor-Istmoment) | Z | | Z |
| Üₛₒₗₗ (Soll-Übersetzung) | S | Ü_{soll,o.k.} (AkzeptanzSoll-Übersetzung) | Z |
| | | Üᵢₛₜ (Ist-Übersetzung) | Z |
| WK-Schlupfₛₒₗₗ (WK-Sollschlupf) | S | WK-Schlupfᵢₛₜ (WK-Istschlupf) | Z |
| | | Fehlerstatus der SGCU | Z |
| | | Fehlfunktion der SGCU | Z |
| | | Funktionseinschränkung der SGCU | Z |
| M_{red,ist} (Ist-Momentreduktion) | Z | M_{red,soll} (Soll-Momentreduktion) | S |
| | | Getriebetemperatur | Z |
| | | Wandlerverstärker | Z |
| | | Wählhebelposition | Z |

Zusätzlich zu einem derartigen Datenaustausch können auch Parameter, die zum Steuern des Gangwechselprozesses erforderlich sind, zwischen der Motorsteuerung-Einrichtung 2 und der Getriebesteuerung-Einrichtung 4 über den Kommunikationskanal 6 ausgetauscht werden. Diese Parameter werden zweckmäßigerweise als physikalische Einheiten übertragen. Ein Beispiel für zu übertragende Parameter ist in nachfolgender Tabelle dargestellt.

| MS an SGCU | SGCU an MS |
|---|---|
| Massenträgheitsmoment | Ganganzahl |
| Wagenmasse | Übersetzungsverhältnisse |
| Radgröße | Schaltungsarten |

Als Schaltungsarten werden hier die von dem jeweiligen Getriebe abhängigen zulässigen Gangwechsel bezeichnet. So ist zum Beispiel eine Rückschaltung von dem fünften in den ersten oder zweiten, teilweise auch in den dritten, Gang bei vielen Getrieben nicht zugelassen.

Hieraus ergeben sich folgende Vorteile: von der Getriebesteuerung-Einrichtung 4 wird nur ein Minimum an motor- und chassisspezifischen Daten benötigt. Sie ist vollständig unabhängig von Daten des Motors und des Chassis. In der Motorsteuerung-Einrichtung 2 wird nur ein Minimum an getriebespezifischen Daten benötigt. Daraus folgt, daß die Getriebesteuerung-Einrichtung bei der Herstellung nicht an unterschiedliche Motor- und Chassisvarianten angepaßt werden muß. Der in der Getriebesteuerung-Einrichtung enthaltene Mikroprozessor oder Rechner - hier nicht dargestellt, da allgemein bekannt - sorgt dafür, daß eine Anpassung anhand von übertragenen Motor- und Chassis-Parametern durchgeführt wird. Eine andere Möglichkeit ist es, Datensätze für die verschiedenen Fahrzeugvarianten in der Getriebesteuerung-Einrichtung 4 zu speichern und jeweils den Datensatz einer dieser Varianten durch ein Codewort zu aktivieren, das über den Kommunikationskanal 6 an die Getriebesteuerung-Einrichtung 4 übertragen wird.

Neben der Übermittlung von physikalischen Parametern, Zustands- und Steuergrößen können auch Identifikationsinformationen zwischen der Motorsteuerung-Einrichtung und der Getriebesteuerung-Einrichtung ausgetauscht werden. Damit wird folgendes erreicht.

Werden z.B. im Rahmen von Reparaturen Komponenten ausgetauscht, so ist vorgesehen, daß die Komponenten über den Kommunikationskanal 6 Identifikationsdaten austauschen, die variantenspezifisch sind, d.h. den Kraftfahrzeugtyp identifizieren für den die jeweilige Komponente geeignet ist. Damit sind die anderen Komponenten oder Steuergeräte in der Lage festzustellen, ob sie miteinander funktionsfähig sind. Auf diese Art wird erkannt, ob z.B. versehentlich ein für das Kraftfahrzeug ungeeignetes Getriebe eingebaut worden ist.

Durch diesen Austausch von steuergerätespezifischen Identifikationsdaten läßt sich außerdem ein nicht autorisierter Austausch von Komponenten oder Geräten unterbinden. Dadurch kann z.B. die Reparatur durch nicht autorisierte Werkstätten und insbesondere der Einbau von gestohlenen Geräten in ein Kraftfahrzeug oder von Austauschkomponenten in ein gestohlenes Kraftfahrzeug wirksam unterbunden werden. Damit wird auch ein verbesserter Diebstahlschutz erreicht.

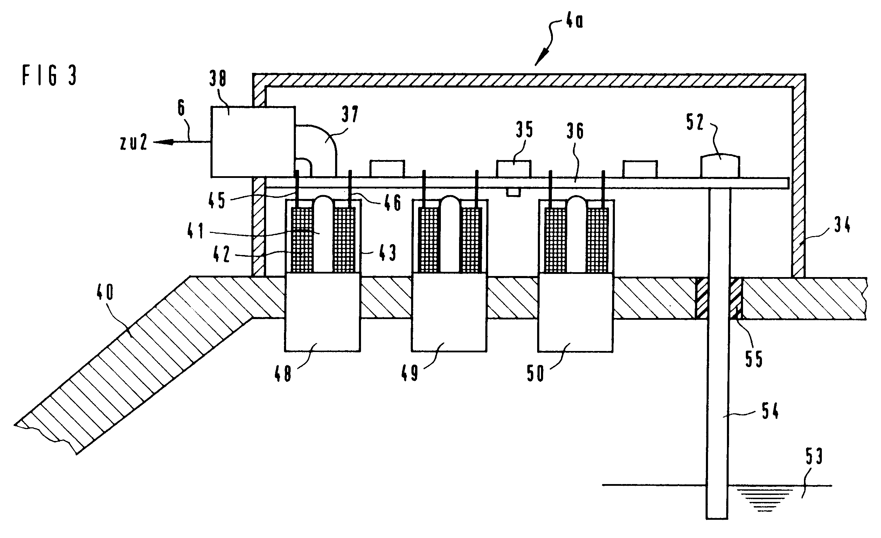

Ein Gehäuse 34 der Getriebesteuerung-Einrichtung oder Gangwechseleinrichtung 4a ist in Figur 3 in einer geschnittenen Teilansicht dargestellt. Die Bestandteile der elektronischen Schaltung, hier nur schematisch als Bauelemente 35 dargestellt, sind auf einer Platine oder Leiterplatte 36 angeordnet. Die Platine 36 weist hier nicht sichtbare Leiterbahnen auf, mit denen die Bauelemente 35 leitend verbunden sind. Über mehrere Leitungen 37 sind die Schaltungsbestandteile auf der Platine 36 mit einem Stecker 38 verbunden, über den die äußeren Anschlüsse der Getriebesteuerung-Einrichtung hergestellt werden, insbesondere die Verbindung zu der Motorsteuerung-Einrichtung 2.

Die Getriebesteuerung-Einrichtung 4a ist direkt auf dem automatischen Kraftfahrzeug-Getriebe befestigt, von dem in Figur 3 ein Teil des Getriebegehäuses dargestellt ist. Durch die Wand des Getriebegehäuses 40 sind mehrere Ventile mit ihrem jeweiligen hydraulischen Schieber, der in einem sogenannten Ventildom 41 steckt, so hindurchgeführt, daß sie in die Getriebesteuerung-Einrichtung 4a hineinragen. Jeder Ventildom wird von einer Magnetspule 42 mit einem Joch 43 umfaßt. Über Anschlußleitungen 45 und 46 werden sie von der elektronischen Schaltung auf der Leiterplatte 36 mit Strom versorgt und gesteuert.

Die Ventile, von denen hier zwei Schaltventile 48 und 49 sowie ein Proportionalventil 50 dargestellt sind, dienen in bekannter Weise zum Betätigen von Kupplungen und Bremsen in dem automatischen Getriebe und damit zum Steuern der Schaltvorgänge. Jedes Ventil enthält bekanntlich einen Ventilkörper und einem in diesem beweglichen Stößel, der über die in der jeweiligen Magnetspule fließenden Ströme bewegt wird.

Auf der Leiterplatte 36 ist auch ein Temperatursensor 52 befestigt, mit dem die Temperatur des Hydrauliköls 53 in dem Getriebe gemessen wird. Er ist durch ein gut wärmeleitendes Element - z.B. durch einen dicken Kupferdraht 54 - mit dem Getriebeöl oder einem Teil des Getriebegehäuses 40, der mit dem Getriebeöl in Berührung steht und damit dessen Temperatur annimmt, thermisch gekoppelt. Gegenüber dem Getriebegehäuse ist der Kupferkabel durch eine Kunststoffhülse 55 isoliert.

Die Getriebesteuerung-Einrichtung 4 bildet somit eine bauliche Einheit mit den Hydraulikventilen 48, 49, 50 des Getriebes.

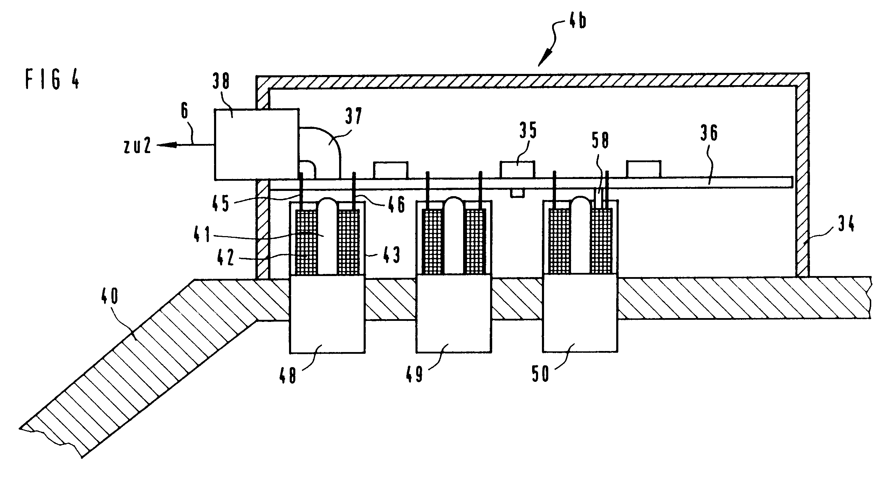

Bei dem aus Figur 4 ersichtlichen weiteren Ausführungsbeispiel der Getriebesteuerung 4 sind die Bestandteile, die mit denen von Figur 3 übereinstimmen, mit den gleichen Bezugszeichen versehen. Auf der Leiterplatte 36 ist hier ein Magnetflußsensor 58, z.B. in Form eines SMD-Bauelements, befestigt. Solche Magnetflußsensoren sind im Handel erhältlich. Der Magnetflußsensor 58 mißt den magnetischen Fluß in der Magnetspule 42 des Proportionalventils 50 - oder der Schaltventile 48 und 49 - und damit direkt die auf den jeweiligen Ventilstößel wirkende Kraft. Daraus ergibt sich eine kostengünstige und platzsparende Möglichkeit der Kraftmessung. Ein weiterer Vorteil liegt darin, daß der Einfluß der Magnethysterese auf die Gesamthysterese der Hydraulikventile 48 bis 50 selbsttätig mit ausgeregelt wird. Damit läßt sich eine größere Genauigkeit der Ventilsteuerung erreichen, als bei einer reinen Stromregelung.

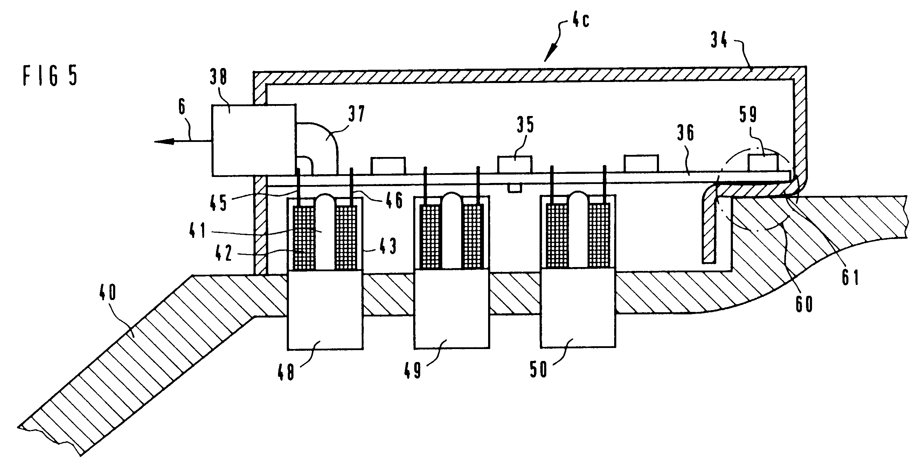

Ein weiteres Ausführungsbeispiel 4c einer Getriebesteuerung-Einrichtung (Figur 5) ist ein auf der Leiterplatte 36 montierter Temperatursensor 59 thermisch eng mit dem Getriebegehäuse 40 gekoppelt, und zwar in einem durch einen strichpunktierten Kreis 60 angedeuteten Bereich. Dazu sind der Temperatursensor 59 und das Getriebegehäuse 40 mit einem gut wärmeleitenden Metallstück 61 verbunden. Die Verbindung muß in einem Bereich des Getriebegehäuses 40 erfolgen, das mit dem Hydrauliköl in Berührung steht und dessen Temperatur annimmt.

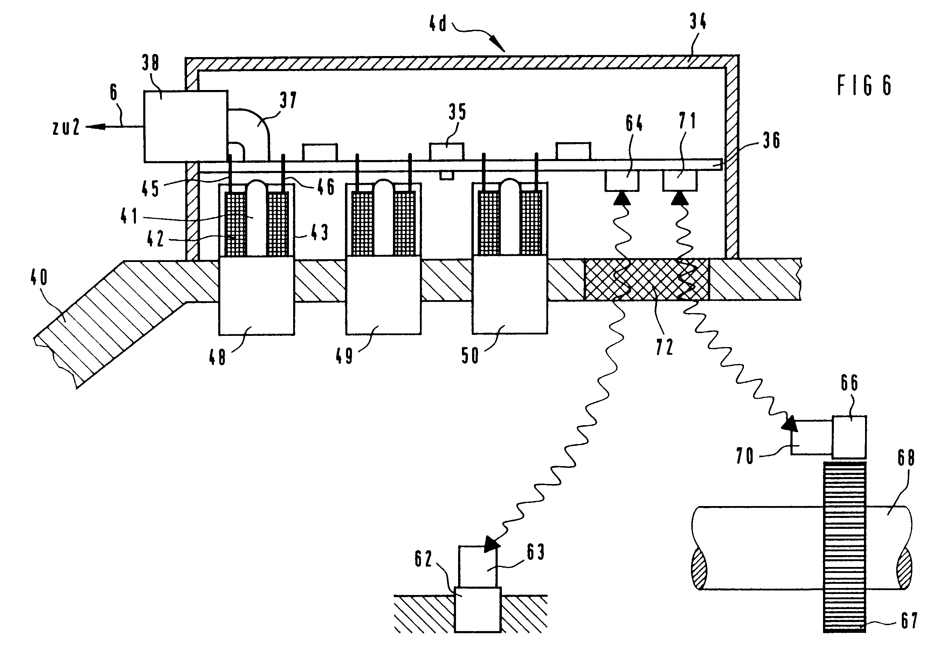

Bei einem weiteren Ausführungsbeispiel 4d der Getriebesteuerung-Einrichtung (Figur 6) werden die Meßwerte von Sensoren drahtlos von der Meßstelle zu der Getriebesteuerung-Einrichtung übertragen. Ein Temperatursensor 62 ist innerhalb des Getriebegehäuses 40 angeordnet und mit einem Transponderelement 63 verbunden, das auf Anforderung die Meßdaten per Funk an einen Transpondersender und -empfänger 64 übermittelt, der auf der Leiterplatte 36 befestigt ist.

Ein magnetischer Drehzahlsensor 66, z.B. ein Hallsensor, tastet die unterbrechungen an dem Außenumfang eines Polrads oder eines Zahnrads 67 ab, das auf einer Getriebewelle 68 befestigt ist und mißt somit deren Drehzahl. Der Drehzahlsensor 66 ist ebenfalls mit einem Transponderelement 70 versehen, das die Meßdaten auf Anforderung an einen zweiten Transpondersender und -empfänger 71 auf der Leiterplatte 71 drahtlos übermittelt. Das Getriebegehäuse 40 muß dazu einen Bereich 72 aufweisen, der für elektromagnetische Wellen durchlässig ist.

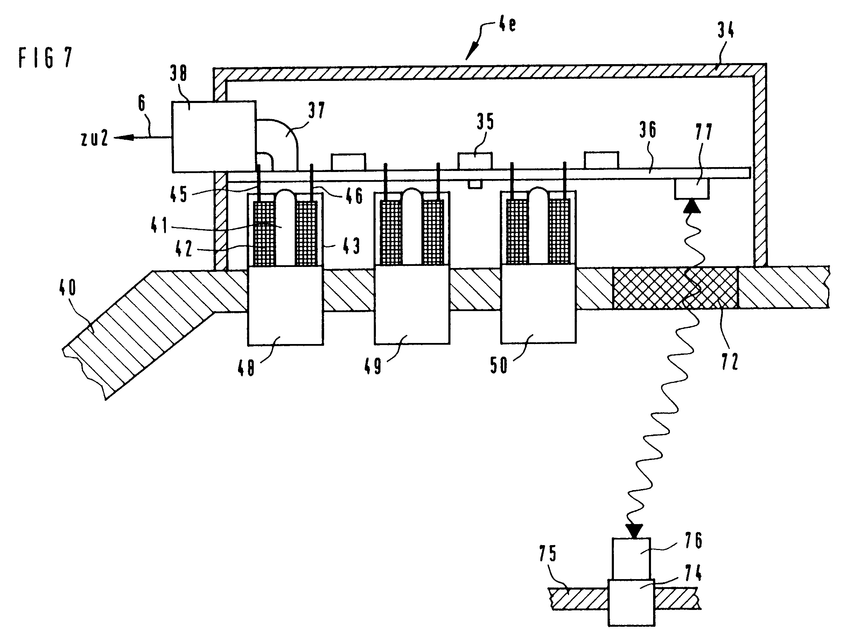

Bei noch einem anderen Ausführungsbeispiel 4e der Getriebesteuerung-Einrichtung (Figur 7) ist ein Drucksensor 74 an einer Halterung oder Rippe 75 innerhalb des Getriebegehäuses 40 befestigt und mit einem Transponderelement 76 versehen. Dieses Transponderelement sendet die Meßdaten an einen Transpondersender und - empfänger 77, der an der Leiterplatte 36 der Getriebesteuerung-Einrichtung 4e befestigt ist. Der Transpondersender 77 versorgt das Transponderelement 76 durch Induktion oder hochfrequente elektromagnetische Wellen mit Energie, so daß das Transponderelement keine eigene Energieversorgung, z.B. Batterie, benötigt. Entsprechend können auch die Tranpondersender und - empfänger 64 und 71 die jeweiligen Transponderelemente 62 und 70 drahtlos mit Energie versorgen. Das Transponderelement 70 kann auch durch das magnetische Wechselfeld, das durch die sich drehende Getriebewelle 66 erzeugt wird, mit Energie versorgt werden. Der Temperatursensor 62 und der Drehzahlsensor 66 können auch mit einem kombinierten Transponder verbunden werden, der sowohl die Temperatur- als auch die Drehzahlwerte an die Getriebesteuerung-Einrichtung 4d übermittelt.

Der Drucksensor 74 (Figur 7) kann aus einem im Handel erhältlichen Halbleitersensorelement auf Siliziumbasis bestehen.

Eine oder mehrere der Magnetspulen 42 der Hydraulikventile 48 bis 50 können als induktives Sende- und Empfangselement für die Meßdatenübermittlung zwischen den Sensoren und der elektronischen Schaltung der Getriebesteuerung-Einrichtung 4 mitbenutzt werden. Zur drahtlosen Datenübertragung kann schließlich auch eine in das Getriebe eingebaute Induktionsschleife und eine damit verbundene Modulatorstufe verwendet werden. Soll die Meßdatenübermittlung aus einem besonderen Grund doch drahtgebunden erfolgen, so können die Ventildome 41 als Steckkontakte zum Übertragen der elektrischen Sensorsignale verwendet werden.

## Patentansprüche

1. Steuerungsanordnung für ein Kraftfahrzeug mit einem in einem Gehäuse untergebrachten automatischen Getriebe (3), wobei die Steuerungsanordnung eine Einrichtung (4) zur Getriebesteuerung und eine Einrichtung (2) zur Motorsteuerung einschließt, welche durch einen Kommunikationskanal (6) miteinander verbunden sind, wobei das Getriebe mit Spulen aufweisenden elektrohydraulischen Drucksteuerventilen geschaltet wird, durch die Reibelemente in dem Getriebe betätigt werden, und wobei von Sensoren erfaßte Sensorsignale an die Getriebesteuerungseinrichtung (4) übertragen und in dieser ausgewertet werden,
dadurch gekennzeichnet,
- daß die Getriebesteuerungseinrichtung (4) an dem Getriebegehäuse befestigt ist,
- daß die Spulen in der Getriebesteuerungseinrichtung (4) integriert sind, und
- daß die Übertragung der Sensorsignale der Sensoren (62, 66, 74) drahtlos erfolgt.

2. Steuerungsanordnung nach Anspruch 1, dadurch gekennzeichnet, daß Schalterkontakte eines Wählhebels (16), mit dem Fahrprogramme des automatischen Getriebes durch den Fahrer ausgewählt werden, in die Getriebesteuerungseinrichtung (4) integriert und durch eine mechanische oder magnetische Verbindung mit dem Wählhebel (16) verbunden sind.

3. Steuerungsanordnung nach Anspruch 1, dadurch gekennzeichnet, daß die Getriebesteuerungseinrichtung (4) einen den magnetischen Fluß in den Spulen (42) der elektrohydraulischen Drucksteuerventile (48-50) messenden Magnetflußsensor (58) enthält.

4. Steuerungsanordnung nach Anspruch 1, dadurch gekennzeichnet, daß die Getriebesteuerungseinrichtung (4) einen die Öltemperatur in dem Getriebe (3) messenden Temperatursensor (59) enthält, der mit der Meßstelle in dem Getriebe durch ein gut wärmeleitendes Metallteil (61) verbunden ist.

5. Steuerungsanordnung nach Anspruch 4, dadurch gekennzeichnet, daß der Temperatursensor (59) auf einer Leiterplatte (36) in der Getriebesteuerungseinrichtung (4) montiert ist und daß diese Leiterplatte mit einem Bereich des Getriebegehäuses, der die Temperatur des Getrieböls annimmt, thermisch gekoppelt ist.

6. Steuerungsanordnung nach Anspruch 1, dadurch gekennzeichnet, daß der als Temperatursensor ausgebildete Sensor 62) innerhalb des Getriebegehäuses angeordnet und an einen Transponder (63) angeschlossen ist, von dem auf Anforderung die Temperaturmeßwerte drahtlos an einen Empfänger (64) in der Getriebesteuerungseinrichtung (4) übermittelt werden.

7. Steuerungsanordnung nach Anspruch 1, dadurch gekennzeichnet, daß der als Drehzahlsensor ausgebildete Sensor (66) innerhalb des Getriebegehäuses angeordnet und an einen Transponder (70) angeschlossen ist, von dem auf Anforderung Getriebedrehzahlwerte drahtlos an einen Empfänger (71) in der Getriebesteuerungseinrichtung (4) übermittelt werden.

8. Steuerungsanordnung nach Anspruch 1, dadurch gekennzeichnet, daß die Sensoren (62, 66) innerhalb des Getriebegehäuses angeordnet und an einen Transponder (63, 70) angeschlossen sind, von dem auf Anforderung Meßwerte drahtlos an einen Empfänger (64, 71) in der Getriebesteuerungseinrichtung (4) übermittelt werden, und daß der Transponder durch Induktion oder Hochfrequenzschwingungen drahtlos mit Energie versorgt wird.

9. Steuerungsanordnung nach Anspruch 1, dadurch gekennzeichnet, daß der als Halbleiter-Drucksensor ausgebildete Sensor (74) innerhalb des Getriebegehäuses angeordnet und an einen Transponder (76) angeschlossen ist, von dem auf Anforderung Druckmeßwerte drahtlos an einen Empfänger (77) in der Getriebesteuerungseinrichtung (4) übermittelt werden.

10. Steuerungsanordnung nach Anspruch 1, dadurch gekennzeichnet, daß Funktionseinheiten (5) der Getriebesteuerungseinrichtung (4), die von Daten des Motors (1) und des Chassis des Kraftfahrzeugs abhängig sind, in die Motorsteuerungseinrichtung (2) integriert sind,
- daß Funktionseinheiten (28, 29, 30, 32) der Getriebesteuerungseinrichtung, die von Daten des Getriebes (3) abhängig sind, in einer rechnergesteuerten Gangwechseleinrichtung des Getriebes enthalten sind, und
- daß die zum Steuern des Getriebes (3) erforderlichen Daten zwischen der Motorsteuerungseinrichtung (2) und der Gangwechseleinrichtung über den Kommunikationskanal (6) ausgetauscht werden.

## Claims

1. Control arrangement for a motor vehicle with an automatic gearbox (3) accommodated in a housing, the control arrangement including a device (4) for gearbox control and a device (2) for engine control which are connected to one another by means of a communication channel (6), the gearbox being shifted using electrohydraulic pressure control valves which have coils and by means of which friction elements in the gearbox are actuated, and sensor signals detected by sensors being transmitted to the gearbox control device (4) and evaluated therein, characterized
- in that the gearbox control device (4) is mounted on the gearbox housing,
- in that the coils are integrated into the gearbox control device (4), and
- in that the transmission of the sensor signals of the sensors (62, 66, 74) takes place in a wireless fashion.

2. Control arrangement as claimed in Claim 1, characterized in that switch contacts of a gear shift lever (16) with which driving programmes of the automatic gearbox are selected by the driver, are integrated into the gearbox control device (4) and connected to the gear shift lever (16) by means of a mechanical or magnetic connection.

3. Control arrangement as claimed in Claim 1, characterized in that the gearbox control device (4) contains a magnetic flux sensor (58) which measures the magnetic flux in the coils (42) of the electrohydraulic pressure control valves (48-50).

4. Control arrangement as claimed in Claim 1, characterized in that the gearbox control device (4) contains a temperature sensor (59) which measures the temperature of the oil in the gearbox (3) and is connected to the measurement point in the gearbox by means of a metal component (61) which is a good conductor of heat.

5. Control arrangement as claimed in Claim 4, characterized in that the temperature sensor (59) is mounted on a printed circuit board (36) in the gearbox control device (4), and in that this printed circuit board is thermally coupled to a region of the gearbox housing which assumes the temperature of the transmission oil.

6. Control arrangement as claimed in Claim 1, characterized in that the sensor (62) which is constructed as a temperature sensor is arranged inside the gearbox housing and is connected to a transponder (63) from which the temperature measurement values are transferred on reguest to a receiver (64) in the gearbox control device (4) in a wireless fashion.

7. Control arrangement as claimed in Claim 1, characterized in that the sensor (66) which is constructed as a rotational speed sensor is arranged inside the gearbox housing and is connected to a transponder (70) from which transmission rotational speed values are transferred on request to a receiver (71) in the gearbox control device (4) in a wireless fashion.

8. Control arrangement as claimed in Claim 1, characterized in that the sensors (62, 66) are arranged inside the gearbox housing and are connected to a transponder (63, 70) from which measurement values are transferred on request to a receiver (64, 71) in the gearbox control device (4) in a wireless fashion, and in that the transponder is supplied with power in a wireless fashion by induction or high-frequency oscillations.

9. Control arrangement as claimed in Claim 1, characterized in that the sensor (74) which is constructed as a semiconductor pressure sensor is arranged inside the gearbox housing and is connected to a transponder (76) from which pressure measurement values are transferred on request to a receiver (77) in the gearbox control device (4) in a wireless fashion.

10. Control arrangement as claimed in Claim 1, characterized in that functional units (5) of the gearbox control device (4), which are dependent on data on the engine (1) and of the chassis of the motor vehicle, are integrated into the engine control device (2),
- in that functional units (28, 29, 30, 32) of the gearbox control device, which are dependent on data on the gearbox (3), are contained in a computer-controlled gearbox control of the gearbox, and
- in that the data required for controlling the gearbox (3) are exchanged between the engine control device (2) and the gear shifting device via the communication channel (6).

## Revendications

1. Agencement de commande pour un véhicule automobile comprenant une boîte de vitesses automatique (3) monté dans un carter, l'agencement de commande comprenant un dispositif (4) servant à la commande de boîte de vitesses et un dispositif (2) servant à la commande de moteur qui sont reliés l'un à l'autre par un canal de communication (6), les passages de la boîte de vitesses s'effectuant au moyen de valves électrohydrauliques de commande de pression qui comportent des bobines et au moyen desquelles les éléments de friction contenus dans la boîte de vitesses sont actionnés, et des signaux détectés par des capteurs étant transmis au dispositif de commande de boîte (4) et étant exploités dans ce dispositif,
caractérisé
- en ce que le dispositif de commande de boîte (4) est fixé sur le carter de boîte,
- en ce que les bobines sont intégrées dans le dispositif de commande de boîte (4) et
- en ce que la transmission des signaux des capteurs
(62, 66, 74) s'effectue sans fil.

2. Agencement de commande suivant la revendication 1, caractérisé en ce que des contacts de commutateur d'un levier de sélection (16), au moyen duquel des programmes de conduite de la boîte de vitesses automatique sont sélectionnés par le conducteur, sont intégrés dans le dispositif de commande de boîte (4) et sont reliés au levier de sélection (16) au moyen d'une liaison mécanique ou magnétique.

3. Agencement de commande suivant la revendication 1, caractérisé en ce que le dispositif de commande de boîte (4) contient un capteur de flux magnétique (58) mesurant le flux magnétique dans les bobines (42) des valves électrohydrauliques de commande de pression (48-50).

4. Agencement de commande suivant la revendication 1, caractérisé en ce que le dispositif de commande de boîte (4) contient un capteur de température (59) qui mesure la température d'huile dans la boîte de vitesses (3) et qui est relié à l'emplacement de mesure dans la boîte de vitesses au moyen d'une partie métallique (61) conduisant bien la chaleur.

5. Agencement de commande suivant la revendication 4, caractérisé en ce que le capteur de température (59) est monté sur une carte de circuit imprimé (36) dans le dispositif de commande de boîte (4) et en ce que la carte de circuit imprimé est couplée thermiquement à une zone du carter de boîte qui se met à la température de l'huile de boîte.

6. Agencement de commande suivant la revendication 1, caractérisé en ce que le capteur (62) réalisé sous forme d'un capteur de température est disposé à l'intérieur du carter de boîte et est raccordé à un transpondeur (63) à partir duquel, à la demande, les valeurs de mesure de température sont transmises sans fil à un récepteur (64) situé dans le dispositif de commande de boîte (4).

7. Agencement de commande suivant la revendication 1, caractérisé en ce que le capteur (66) réalisé sous forme d'un capteur de vitesse de rocation est disposé à l'intérieur du carter de boîte et est raccordé à un transpondeur (70) à partir duquel, à la demande, des valeurs de vitesse de rotation de boîte sont transmises sans fil à un récepteur (71) situé dans le dispositif de commande de boîte (4).

8. Agencement de commande suivant la revendication 1, caractérisé en ce que les capteurs (62, 66) sont disposés à l'intérieur du carter de boîte et sont raccordés à un transpondeur (63, 70) à partir duquel, à la demande, des valeurs de mesure sont transmises sans fil à un récepteur (64, 71) situé dans le dispositif de commande de boîte (4) et en ce que le transpondeur est alimenté en énergie, sans fil, par induction ou au moyen d'oscillations haute fréquence.

9. Agencement de commande suivant la revendication 1, caractérisé en ce que le capteur (74) réalisé sous forme d'un capteur de pression à semi-conducteur est disposé à l'intérieur du carter de boîte et est raccordé à un transpondeur (76) à partir duquel, à la demande, des valeurs de mesure de pression sont transmises sans fil à un récepteur (77) situé dans le dispositif de commande de boîte (4).

10. Agencement de commande suivant la revendication 1, caractérisé
- en ce que des unités fonctionnelles (5) du dispositif de commande de boîte (4), qui dépendent de données du moteur (1) et du châssis du véhicule automobile, sont intégrées dans le dispositif de commande de moteur (2),
- en ce que des unités fonctionnelles (28, 29, 30, 32) du dispositif de commande de boîte, qui dépendent de données de la boîte de vitesses (3), sont contenues dans un dispositif de changement de vitesse, commandé par ordinateur, de la boîte de vitesses et
- en ce que les données nécessaires à la commande de la boîte de vitesses (3) sont échangées entre le dispositif de commande de moteur (2) et le dispositif de changement de vitesse par l'intermédiaire du canal de communication (6).
